# EUROPEAN PATENT APPLICATION

(11) **EP 0 814 242 A1**
(43) Date of publication of application: **29.12.1997**
(21) Application number: 97304360.7
(22) Date of filing: 20.06.1997
(51) Int. Cl.: F01N 3/08, B01D 53/94, B01D 53/04

(54) **Combatting air pollution**

(30) Priority: 20.06.1996 GB 9612970
(71) Applicant: JOHNSON MATTHEY PUBLIC LIMITED COMPANY, London EC1N 8JP (GB)
(72) Inventor: Diwell, Alan Francis, Sonning Common, Reading RG4 9RS (GB); Hamilton, Hugh Gavin Charles, Caversham, Reading RG4 8PL (GB); Rajaram, Raj Rao, Slough, SL3 7PH (GB); Brogan, Mark, Cambridge CB1 3UE (GB)
(74) Representative: Brewer, Leonard Stuart

(57) **Abstract**

NOx pollution from a lean-burn engine whose exhaust gas contains NOx and SOx is combatted by the engine's exhaust apparatus containing a NOx absorbent which absorbs NOx when the air-fuel ratio of the exhaust gas passing into it is lean and releases the absorbed NOx when the air-fuel ratio of the exhaust gas passing into it is rich, and a catalyst over which the released NOx is reduced to nitrogen, which apparatus also contains, upstream of the NOx absorbent, a SOx absorbent which absorbs SOx when the air-fuel ratio of the exhaust gas passing into it is lean and releases the absorbed SOx when the air-fuel ratio of the exhaust gas passing into it is rich, the engine being adapted so that the temperature of the exhaust gas of rich air-fuel ratio passing into the SOx absorbent containing the absorbed SOx is sufficiently high that the absorbed SOx is released into the exhaust gas and the exhaust gas then passes into the NOx absorbent without the released SOx being absorbed thereby and releases the absorbed NOx from the NOx absorbent.

## Description

This invention relates to combatting air pollution from an engine whose exhaust gas has an air-fuel ratio which is generally lean and contains nitrogen oxides (commonly termed NOx).

The abatement of pollutant gases in the exhaust gas of petrol (gasoline) engine vehicles has been known for a long time. So-called three-way catalysts are commonly employed to combat air pollution from petrol engines, by oxidising carbon monoxide and hydrocarbons to carbon dioxide and water while simultaneously reducing nitrogen oxides to nitrogen. This results in a substantial reduction in the amount of pollutant gases which are released to the air. In order to achieve good efficiency of the three-way catalyst, the engine is adapted to operate at, or as close as possible to, a unique air-fuel ratio in the cylinder inlet. This unique ratio results in a stoichiometric balance of oxidising to reducing components in the exhaust gas to be treated by the three-way catalyst.

There is increasing impetus to improve the fuel economy of petrol engine vehicles while still maintaining performance. One way to achieve this is to operate in a lean mode, where the air-fuel ratio in the cylinder inlet is in excess of the stoichiometric ratio, 14.6:1. However, the efficiency of standard three-way catalysts for reducing NOx is poor when the air-fuel ratio in the exhaust gas is lean (*ie* when there is an excess of oxygen).

One way of reducing NOx in a lean exhaust gas is to employ an engine whose exhaust apparatus contains a NOx absorbent which absorbs NOx when the air-fuel ratio of the exhaust gas passing into it is lean and releases the absorbed NOx when the oxygen concentration in the exhaust gas passing into it is lowered. In this way, the NOx can be stored when the engine is running lean - which is when the NOx is difficult to reduce to nitrogen - and the engine periodically run rich (so that the oxygen concentration in the exhaust gas is lowered) - when the NOx is easy to reduce to nitrogen - and the stored NOx released and reduced to nitrogen over a catalyst. European patent specification 560991A, whose contents are included herein by reference, discloses such apparatus.

A problem exists, however, in that sulphur compounds are commonly present in fuel and engine lubricating oil, and these form sulphur oxides (commonly termed SOx) in the exhaust gas. The SOx is absorbed in the NOx absorbent, and the amount of SOx thus absorbed steadily increases, resulting in a loss of NOx absorption capacity. European specification 582917A discloses sulphur trapping means arranged in the exhaust apparatus upstream of the NOx absorbent.

The present invention provides an engine whose exhaust gas has an air-fuel ratio which is generally lean and contains nitrogen oxides (NOx) and sulphur oxides (SOx) and whose exhaust apparatus contains a NOx absorbent which absorbs NOx when the air-fuel ratio of the exhaust gas passing into it is lean and releases the absorbed NOx when the air-fuel ratio of the exhaust gas passing into it is rich, and a catalyst over which the released NOx is reduced to nitrogen, which apparatus also contains, upstream of the NOx absorbent, a SOx absorbent which absorbs SOx when the air-fuel ratio of the exhaust gas passing into it is lean and releases the absorbed SOx when the air-fuel ratio of the exhaust gas passing into it is rich, the engine being adapted so that the temperature of the exhaust gas of rich air-fuel ratio passing into the SOx absorbent containing the absorbed SOx is sufficiently high that the absorbed SOx is released into the exhaust gas and the exhaust gas then passes into the NOx absorbent without the released SOx being absorbed therein and releases the absorbed NOx from the NOx absorbent.

The invention provides also a method of combatting air pollution from an engine whose exhaust gas has an air-fuel ratio which is generally lean and contains nitrogen oxides (NOx) and sulphur oxides (SOx), which method comprises passing the exhaust gas at an air-fuel ratio which is lean through a SOx absorbent which absorbs SOx when the air-fuel ratio of the exhaust gas passing into it is lean and releases the absorbed SOx when the air-fuel ratio of the exhaust gas passing into it is rich, whereby the SOx is absorbed, and then passing the exhaust gas into a NOx absorbent which absorbs NOx when the air-fuel ratio of the exhaust gas passing into it is lean and releases the absorbed NOx when the air-fuel ratio of the exhaust gas passing into it is rich, whereby the NOx is absorbed, and subsequently lowering the oxygen concentration of the exhaust gas to make it rich, the temperature of the exhaust gas of rich air-fuel ratio passing into the SOx absorbent containing the absorbed SOx being sufficiently high that the absorbed SOx is released into the exhaust gas and the exhaust gas then passes into the NOx absorbent without the released SOx being absorbed thereby and releases the absorbed NOx from the NOx absorbent, and the released NOx is reduced over a catalyst to nitrogen.

It can be seen that the present invention involves releasing the absorbed SOx when the oxygen concentration of the exhaust gas passing into the SOx absorbent is lowered to make the gas rich. Thus, the SOx absorbent can be regenerated. The European specification 582917A mentioned above makes no mention of this; in contrast, it states, in column 5 lines 52-57 that "the whole SOx discharged from the engine is absorbed in the SOx absorbent 17, and the SOx absorbed in the SOx absorbent 17 is not released even if the air-fuel ratio of the air-fuel mixture fed into the combustion chamber is made rich". It has been discovered that if the temperature of the rich exhaust gas is sufficiently high, the absorbed SOx is released and is not absorbed by the NOx absorbent. The present arrangement allows the SOx absorbent to be regenerated conveniently; the absorbed SOx is released when the air-fuel ratio of the exhaust gas is made rich, which is just the condition needed for release of the NOx from the NOx absorbent. Furthermore, the SOx released from the SOx absorbent under the present conditions is absorbed but little by the downstream NOx absorbent.

The present invention depends on the differing absorption-release properties of SOx and NOx, in particular their different temperature dependencies.

The present engine's exhaust gas has an air-fuel ratio which is generally lean of the stoichiometric balance. There will, however, be the rich excursions demanded by the present invention. The engine can be of various fuel types, but is particularly a diesel or petrol engine. The invention is of particular utility when the engine is that of a vehicle. The engine can be a direct injection petrol engine or a diesel engine. Preferably, the engine is a lean-burn petrol engine.

The invention is particularly useful when the exhaust gas contains an amount of SOx equivalent to at least 1 volume part per million (ppm) of sulphur.

The engine is usually adapted so that it cycles between long, *eg* 20-300 second, lean periods and short, *eg* 0.1-2 second, rich periods of the exhaust gas. The cycling can be operated by an engine management system. The cycling can be carried out as known generally in itself.

During the lean period, NOx is absorbed by the NOx absorbent, which can be as known. The absorbent usually comprises at least one oxide selected from those of alkali metals (*eg* potassium, sodium, lithium and caesium), alkaline earth metals (*eg* magnesium, barium, calcium and strontium) and rare earth metals (*eg* lanthanum, cerium and yttrium). The absorbent is usually carried on a support. The support should preferably be of high surface area, *eg* greater than 20m²/g. The support generally comprises a refractory metal oxide, for instance alumina optionally admixed with ceria. The support itself is preferably carried on a carrier, for instance by being carried in the channels of a honeycomb monolith through which the exhaust gas flows. The monolith can be metal or ceramic. The monolith usually carries 1-60, for instance 1-30, preferably 10-20, g of the absorbent per litre.

The NOx absorbent preferably contains platinum group metal (preferably at least one of Pt, Pd and Ir) to catalyse the release of the absorbed NOx. Thus, the absorbent, in a preferred embodiment, comprises (a) at least one oxide as set out above and (b) such platinum group metal. The platinum group metal catalyst can also oxidise hydrocarbon and carbon monoxide in the exhaust gas. The catalyst can also oxidise NO in the exhaust gas. During the lean period NO is oxidised to NO₂ which is absorbed by forming nitrate with the absorbent, probably largely on the surface of the absorbent. The catalyst can be carried on a support as described above.

During the rich period, NOx is released; this is by decomposition of the nitrate. The released NOx is then reduced, usually by the excess of fuel which makes the mixture rich. The released NOx is reduced over a catalyst to nitrogen. The catalyst, usually rhodium, can be downstream from the NOx absorbent, in which case it can be carried out on a support, and the support can itself be carried on a carrier, both as described above in relation to the NOx absorbent. When it is thus separate, the catalyst is preferably close to the NOx absorbent. Preferably, however, the catalyst is not separate from the NOx absorbent but is carried by the same support as is the absorbent.

The temperature of the NOx absorbent when it is absorbing is usually 100-700°C, preferably 150-650°C, especially 200-450°C. Under such conditions, the kinetic and thermodynamic limitations of the NO oxidation process and the stability of the nitrates are generally at an optimum level.

Under such conditions of temperature and oxidation catalyst, however, sulphur dioxide would be readily oxidised to sulphur trioxide, which would be absorbed by the NOx absorbent by forming sulphate with the absorbent. In some circumstances, sulphur dioxide would also be absorbed by the NOx absorbent by forming sulphate with the absorbent. The sulphates are generally more stable than the nitrates, as shown by their higher decomposition temperatures. The temperature of the NOx absorbent when it is releasing the absorbed NOx is preferably 150-700°C, especially 300-500°C. While nitrate decomposition is very rapid in these ranges under rich conditions, the sulphates would be so stable that complete decomposition would not occur during this period of the cycle. Hence, sulphate would continuously accumulate over these periods and the NOx absorption capability decline, as discussed above. The present invention is an improvement over such a situation.

The exhaust gas passes into the SOx absorbent before the gas reaches the NOx absorbent. The SOx absorbent is generally such that during the lean period it absorbs SOx preferentially to NOx. This can be achieved by the temperature of the SOx absorbent being sufficiently high. At higher temperatures, sulphation of the absorbent predominates over nitration. The temperature of the SOx absorbent when it is absorbing the SOx is preferably 450-550°C.

The temperature of the SOx absorbent is preferably higher than that of the NOx absorbent, usually by at least 50°C, especially at least 100°C. This promotes the absorption and release of the SOx during the lean and rich periods respectively.

The sufficiently high temperature required of the rich exhaust gas passing into the SOx absorbent to release the absorbed SOx into the exhaust gas without the SOx then being absorbed by the NOx absorbent is preferably achieved merely by positioning the SOx absorbent sufficiently close to the engine and the engine operation providing the appropriate temperature to the rich exhaust gas. Normally, the engine needs no special adjustment for its operation to provide the appropriate temperature. The simplicity of achieving this higher temperature in this way is a great advantage. In a preferred arrangement, the SOx absorbent is preferably fitted in the so-called close-coupled position or slightly further downstream. For instance the front of the SOx absorbent can be 20-40cm from the outlet of an engine manifold, as measured by gas flow length. The NOx absorbent can conveniently be further from the engine, *eg* its front being 0.5-4 metres from the outlet of an engine manifold as measured by gas flow length. It can thus be in a cooler, under-floor, position of a vehicle.

The temperature of the SOx absorbent when it is releasing the absorbed SOx is usually 500-1100°C, preferably 600-900°C, especially 700-900°C.

When released under the present rich conditions, the SOx tends not to be then absorbed by the NOx absorbent. Merely having a rich exhaust gas of high enough temperature that the absorbed SOx is released from the SOx absorbent would be of limited benefit, of course, if the released SOx were then absorbed by the NOx absorbent. The temperature of the rich exhaust gas in the present invention is sufficiently high that the SOx is released without significant absorption of it by the NOx absorbent. It is a great advantage of the present invention that this can be achieved so conveniently.

The SOx absorbent can be a known NOx absorbent. The SOx absorbent usually comprises at least one oxide selected from those of alkali metals *(eg* potassium, sodium, lithium and caesium), alkaline earth metals (*eg* magnesium, barium, calcium and strontium) and rare earth metals (*eg* lanthanum, cerium and yttrium). The absorbent is usually carried on a support. The support should preferably be of high surface area, *eg* greater than 20m²/g. The support generally comprises a refractory metal oxide, for instance alumina optionally admixed with ceria. The support itself is preferably carried on a carrier, for instance by being carried in the channels of a honeycomb monolith through which the exhaust gas flows. The monolith can be metal or ceramic. The monolith usually carries 1-60, for instance 1-30, preferably 10-20, g of the absorbent per litre.

Upstream of the NOx absorbent, there can be an oxidation catalyst to oxidise hydrocarbon and carbon monoxide in the exhaust gas to carbon dioxide and water. Such a catalyst usually comprises platinum and/or palladium. Alternatively or additionally, there can be upstream of the NOx absorbent a reduction catalyst, usually rhodium, to reduce NOx in the exhaust gas to nitrogen in the periods in which the exhaust gas is rich. Such oxidation or reduction catalyst is preferably close to the SOx absorbent or carried on the same support as the SOx absorbent. When such catalyst is separate from the SOx absorbent, the catalyst can be carried on a support, and the support can itself be carried on a carrier, both as described above in relation to the NOx absorbent.

When such an oxidation catalyst is employed upstream of the NOx absorbent, the rich periods of the cycle will usually need to be longer, *eg* by 400-500 milliseconds, than they would be otherwise, in order to allow excess of fuel used as reductant to pass the oxidation catalyst and reduce the NOx released from the NOx absorbent.

The invention is illustrated by the accompanying drawings in which:
Figure 1 is a schematic drawing of engine test equipment;
Figure 2 is a graph showing lambda values and NOx emissions against time;
Figure 3 is a graph showing NOx conversion efficiency against time;
Figure 4 is a graph showing NOx conversion efficiency against time, with and without the present SOx absorbent.
Figure 5 is a graph showing the concentration of various sulphur compounds downstream of SOx absorbent against time; and
Figure 6 is a corresponding graph showing the concentration of various sulphur compounds downstream of the present SOx absorbent followed by NOx absorbent against time.

The figures are described further in the following Examples, which illustrate the invention.

### EXAMPLE 1

### Description of Engine Test Equipment

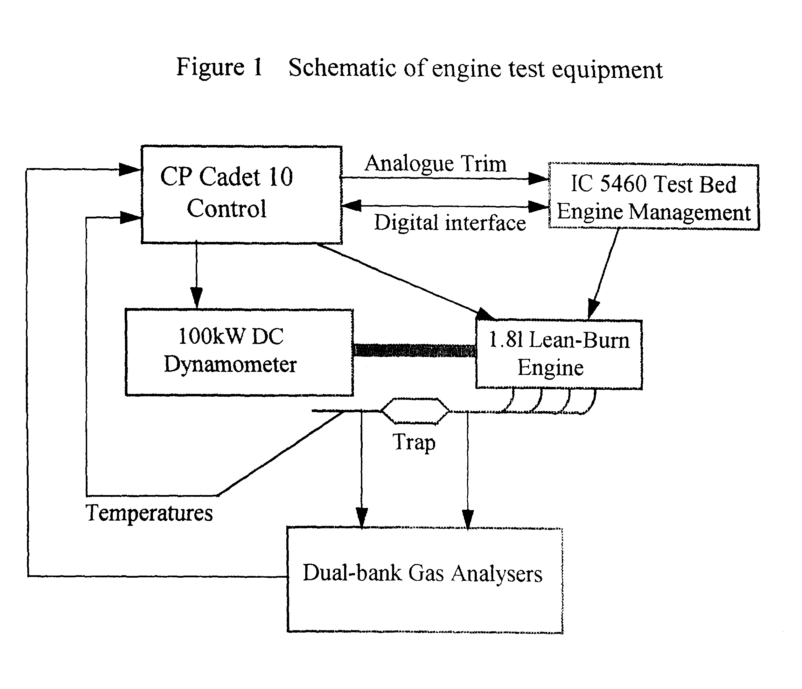

A test bench was equipped with a 1.8 litre lean burn engine, coupled to a 100kW DC regenerative dynamometer, enabling a range of conditions to be employed from high load to about zero torque. The engine was controlled by an Intelligent Controls IC5460 test-bed engine management system, allowing the engine to be run from a basic fuel and ignition map modulated by a signal from the test bench computer. An automated sampling system allowed simultaneous pre- and post-catalyst gas samples to be drawn off to a Horiba MEXA 9500 analyzer system, with the data being passed to the test computer over an IEEE link. The set-up is shown schematically in Figure 1.

The test bench computer was a CP CADET 10 system, allowing set points to be updated at 100ms intervals. Test schedule generation using this system is sufficiently flexible to allow user inputs of selected parameters, lean and rich fuelling trims and durations, target air-fuel ratios or NOx concentrations. The software structure also allowed a control algorithm to be developed such that the fuelling could be controlled to give consistent engine-out NOx levels, using feedback from the gas analyzers.

All test schedules were started by an analyzer calibration sequence, engine start, and warm-up and preconditioning period at lambda = 0.95. The same fuel, used throughout, contained 300ppm sulphur. For all these tests, the NOx absorbent, oxidation catalyst and NOx reduction catalyst were mounted approximately 1.5m from the exhaust manifold, referred to as the 'underfloor position'. For those tests incorporating a SOx absorbent, oxidation catalyst and NOx reduction catalyst upstream of the NOx absorbent, oxidation catalyst and NOx reduction catalyst, the former were placed approximately 0.50m from the exhaust manifold.

The SOx absorbent, oxidation catalyst and NOx reduction catalyst were carried on a monolith. The monolith carried 150g per ft³ (0.028m³) barium carbonate as the SOx absorbent, 40g per ft³ (0.028m³) platinum as the oxidation catalyst and 8g per ft³ (0.028m³) rhodium as the NOx reduction catalyst.

The NOx absorbent, oxidation catalyst and NOx reduction catalyst were similarly carried on a monolith. The monolith carried 400g per ft³ (0.028m³) barium carbonate as the NOx absorbent and the same oxidation catalyst and reduction catalyst as in the case of the SOx absorbent. In both cases the absorbent, platinum and rhodium were each employed as a dispersion on a 1:5 mixture by weight of ceria:alumia.

### Evaluation Cycle

The cycle was designed to give an overall measure of the performance of the exhaust system at a representative operating condition. The engine was run at 3000 rpm, 60 kg/h mass airflow, giving a feed gas temperature in the underfloor position of about 350°C. A pattern of fuelling alternating between lean, controlled to give 600 ppm engine-out NOx (lambda = 1.35), and rich (lambda = 0.7) was applied. The duration of the rich and lean periods was 60 and 1 s respectively. Data were logged at 1Hz, typically over five 60 s cycles. The data, post processed to calculate overall NOx conversion, were averaged over 5 complete cycles.

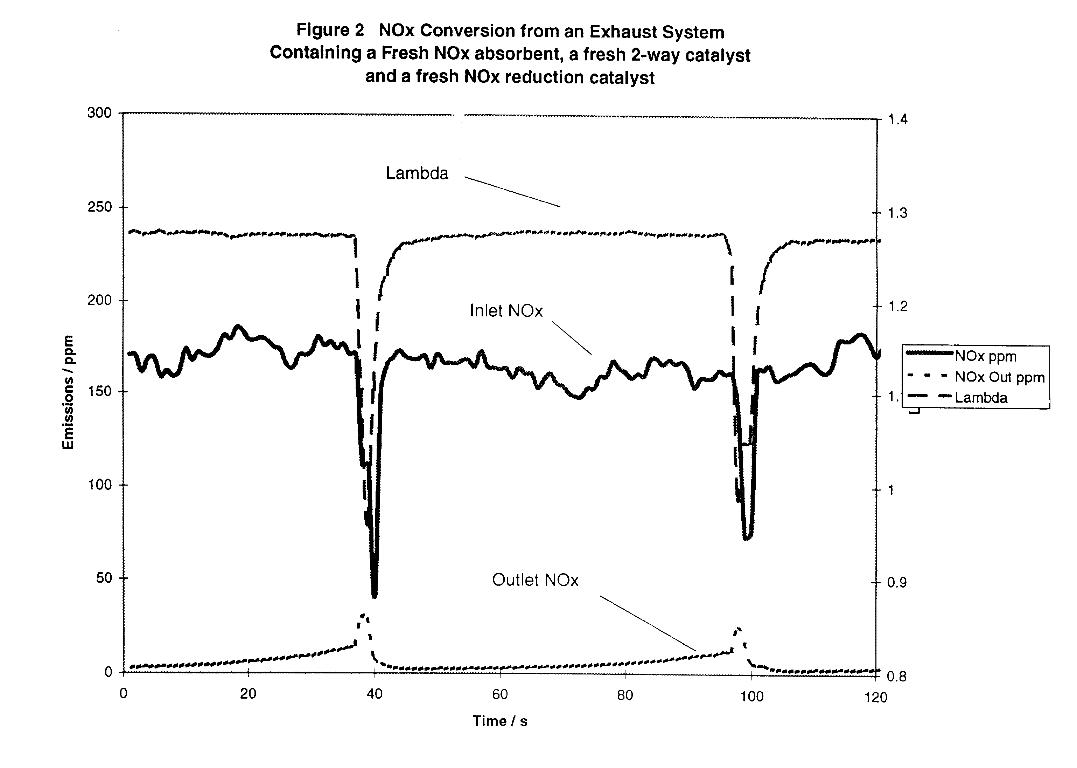

Figure 2 shows the NOx conversion obtained from the exhaust system which has only the fresh NOx absorbent, fresh two-way oxidation catalyst and fresh NOx reduction catalyst, hereinafter called the after-treatment system. The unbroken line in Figure 2 shows the NOx concentration in volume parts per million (ppm) in the exhaust gas leaving the exhaust manifold. The dotted line shows the NOx concentration in ppm immediately downstream of the NOx absorbent, oxidation catalyst and NOx reduction catalyst. The broken line shows the lambda value, whose scale is shown on the right-hand y-axis. The overall NOx efficiency is 96%.

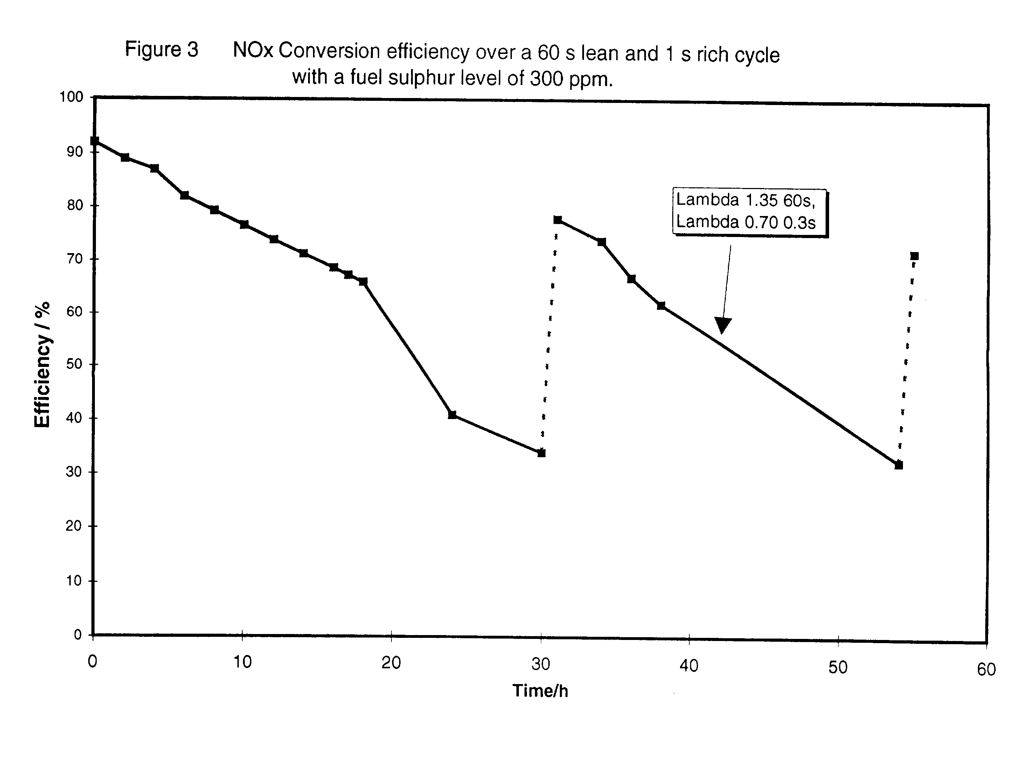

Figure 3 shows the rate of loss of the NOx activity in this system with time. The dotted lines indicate exposure of the after-treatment system to rich exhaust gas, the inlet temperature to the NOx absorbent being 600°C. It can be seen that this exposure results in a marked recovery of the NOx activity.

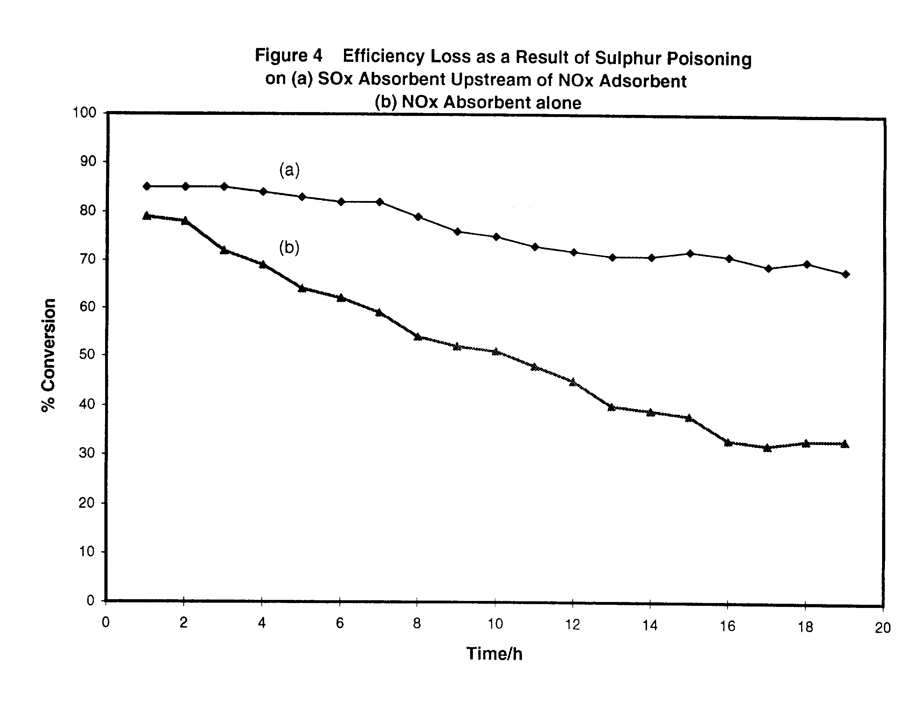

Figure 4 shows a comparison, under otherwise identical conditions, of the decline in the activity of the after-treatment system with and without a SOx absorbent upstream of the NOx absorbent. It can be seen that the decline in activity is much reduced when the upstream SOx absorbent is present.

### EXAMPLE 2

The equipment described in Example 1 was employed except for the cycle and fuel sulphur content as described below. The oxidation catalyst and NOx reduction catalyst are collectively referred to below as three-way catalyst. An Air-sense 500 Secondary Ion mass spectrometer from V+F Analysis Technik was utilised to measure sulphur compounds in the exhaust. The instrument had a minimum response time of 30ms and detection levels down to 1ppb on a 100ms cycle time (reference benzene).

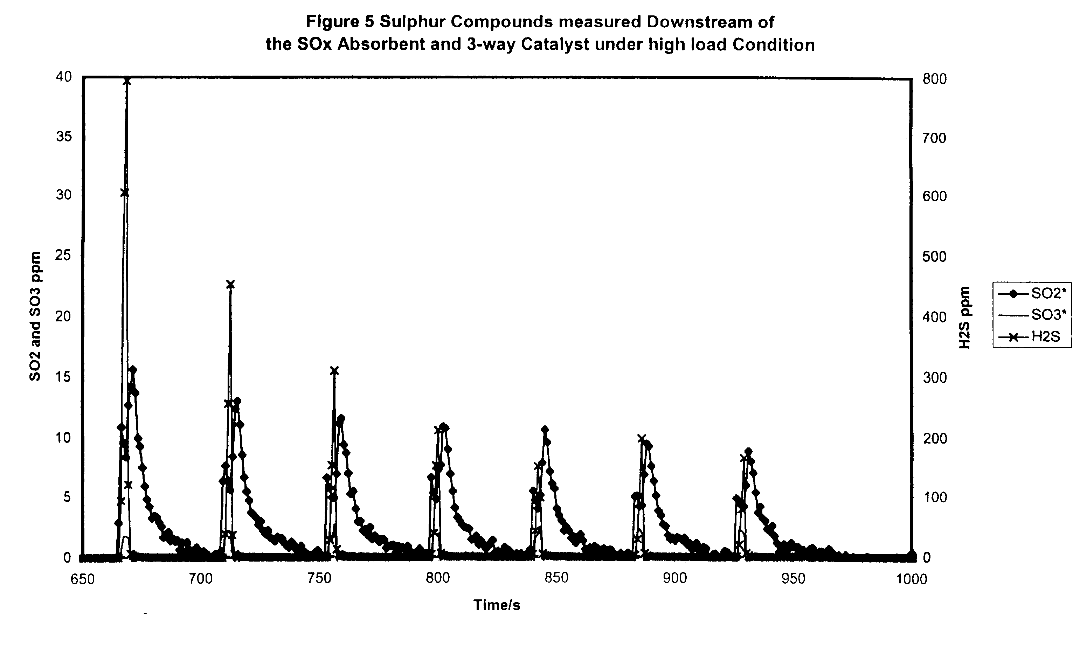

Figure 5 shows the concentration of sulphur compounds in the gas phase downstream of the SOx absorbent and first three-way catalyst. The recording frequency is 1Hz. The cycle established is 40s lean at λ = 1.35 and 5s rich at λ = 0.7. The engine speed and load were adjusted to 3000rpm and 40Nm respectively. The fuel used had a sulphur level of 200ppm, which equates to about 10.1ppm in the exhaust under lean conditions. The inlet temperature to the SOx absorbent/three-way catalyst was 600°C. It is clear from the Figure that during most of the lean cycle SO₂ is absorbed on the SOx absorbent and that returning to rich conditions this is then released as H₂S and SO₂. The SO₂ peak lies some 7s behind the H₂S peak which reaches a maximum at around the same time as maximum richness in the gas phase.

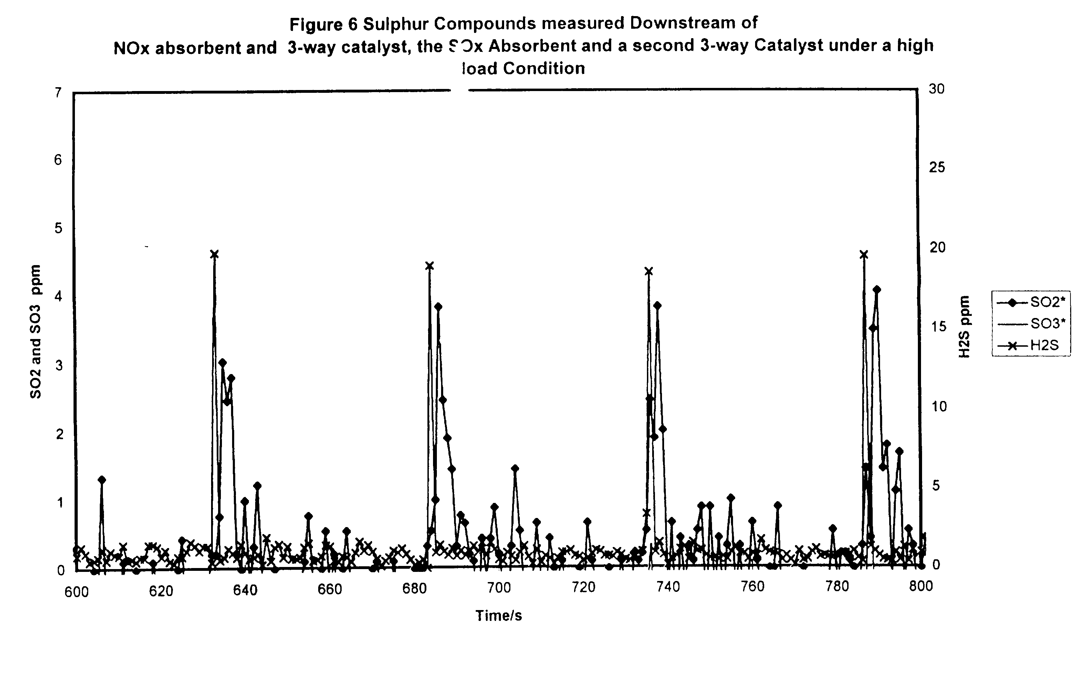

Figure 6 shows the corresponding concentration of the sulphur compounds downstream of a NOx absorbent and second three-way catalyst which in turn were downstream of the SOx absorbent and first three-way catalyst employed in connection with Figure 5. The inlet temperature to the NOx absorbent/three-way catalyst was 350°C. The test conditions were identical to those for Figure 5. It is clear that significant SO₂ passed through the system, having been absorbed on the SOx absorbent under lean conditions and released under rich conditions.

## Claims

1. An engine whose exhaust gas has an air-fuel ratio which is generally lean and contains nitrogen oxides (NOx) and sulphur oxides (SOx) and whose exhaust apparatus contains a NOx absorbent which absorbs NOx when the air-fuel ratio of the exhaust gas passing into it is lean and releases the absorbed NOx when the air-fuel ratio of the exhaust gas passing into it is rich, and a catalyst over which the released NOx is reduced to nitrogen, which apparatus also contains, upstream of the NOx absorbent, a SOx absorbent which absorbs SOx when the air-fuel ratio of the exhaust gas passing into it is lean and releases the absorbed SOx when the air-fuel ratio of the exhaust gas passing into it is rich, the engine being adapted so that the temperature of the exhaust gas of rich air-fuel ratio passing into the SOx absorbent containing the absorbed SOx is sufficiently high that the absorbed SOx is released into the exhaust gas and the exhaust gas then passes into the NOx absorbent without the released SOx being ahsorbed thereby and releases the absorbed NOx from the NOx absorbent.

2. An engine according to claim 1 adapted so that the temperature of the NOx absorbent when it is absorbing the NOx is 100-700°C.

3. An engine according to claim 1 or 2 adapted so that the temperature of the NOx absorbent when it is releasing the absorbed NOx is 150-700°C

4. An engine according to any one of claims 1 to 3 adapted so that the temperature of the SOx absorbent when it is absorbing the SOx is 200-1100°C.

5. An engine according to any one of the preceding claims adapted so that the temperature of the SOx absorbent when it is releasing the absorbed SOx is 500-1100°C.

6. An engine according to any one of the preceding claims wherein the NOx absorbent comprises (a) at least one oxide selected from those of alkali metals, alkaline earth metals and rare earth metals and (b) platinum group metal to catalyse the release of the absorbed NOx.

7. An engine according to any one of the preceding claims wherein the SOx absorbent comprises at least one oxide selected from those of alkali metals, alkaline earth metals and rare earth metals.

8. An engine according to any one of the preceding claims wherein the front of the SOx absorbent is 20-40cm from the outlet of an engine manifold.

9. An engine according to any one of the preceding claims which is a petrol engine.

10. A method of combatting air pollution from an engine whose exhaust gas has an air-fuel ratio which is generally lean and contains nitrogen oxides (NOx) and sulphur oxides (SOx), which method comprises passing the exhaust gas at an air-fuel ratio which is lean through a SOx absorbent which absorbs SOx when the air-fuel ratio of the exhaust gas passing into it is lean and releases the absorbed SOx when the air-fuel ratio of the exhaust gas passing into it is rich, whereby the SOx is absorbed, and then passing the exhaust gas into a NOx absorbent which absorbs NOx when the air-fuel ratio of the exhaust gas passing into it is lean and releases the absorbed NOx when the air-fuel ratio of the exhaust gas passing into it is rich, whereby the NOx is absorbed, and subsequently lowering the oxygen concentration of the exhaust gas to make it rich, the temperature of the exhaust gas of rich air-fuel ratio passing into the SOx absorbent containing the absorbed SOx being sufficiently high that the absorbed SOx is released into the exhaust gas and the exhaust gas then passes into the NOx absorbent without the released SOx being absorbed thereby and releases the absorbed NOx from the NOx absorbent, and the released NOx is reduced over a catalyst to nitrogen.

11. A method according to claim 10 wherein the temperature of the NOx absorbent when it is absorbing the NOx is 100-700°C.

12. A method according to claim 10 or 1 wherein the temperature of the NOx absorbent when it is releasing the absorbed NOx is 150-700°C.

13. A method according to any one of claims 10 to 12 wherein the temperature of the SOx absorbent when it is absorbing the SOx is 200-1100°C.

14. A method according to any one of claims 10 to 13 wherein the temperature of the SOx absorbent when it is releasing the absorbed SOx is 500-1100°C.

15. A method according to any one of claims 10 to 14 wherein the NOx absorbent comprises (a) at least one oxide selected from those of alkali metals, alkaline earth metals and rare earth metals and (b) platinum group metal to catalyse the release of the absorbed NOx.

16. A method according to any one of claims 10 to 15 wherein the SOx absorbent comprises at least one oxide selected from those of alkali metals, alkaline earth metals and rare earth metals.

17. A method according to any one of claims 10 to 16 wherein the front of the SOx absorbent is 20-40cm from the outlet of an engine manifold.

18. A method according to any one claims 10 to 17 wherein the engine is a petrol engine.
